# EUROPÄISCHE PATENTANMELDUNG

(11) **EP 0 625 817 A1**
(43) Veröffentlichungstag der Anmeldung: **23.11.1994**
(21) Anmeldenummer: 94105857.0
(22) Anmeldetag: 13.04.1994
(51) Int. Cl.: H02J 13/00, H02G 3/00, H04B 10/00, H01H 23/28

(54) **Bedieneinheit für Installationsgeräte**

(30) Priorität: 19.04.1993 DE 4312614
(71) Anmelder: ABB PATENT GmbH, D-68309 Mannheim (DE)
(72) Erfinder: Vollmann, Peter, D-58091 Hagen (DE); Grotensohn, Michael, D-58515 Lüdenscheid (DE); Pint, Ulrich, D-58093 Hagen (DE)
(74) Vertreter: Rupprecht, Klaus, Dipl.-Ing.

(57) **Zusammenfassung**

Die Erfindung betrifft eine Bedieneinheit zum austauschbaren Aufstecken auf ein mit Schaltelementen ausgestattetes Geräteunterteil (30) eines zum unmittelbaren Anschließen von Verbrauchern dienenden Installationsgerätes (30,40). Vorgesehen ist eine Schnittstelle zur Kontaktierung des Geräteunterteils, sowie eine als Schalter und/oder Taster wirkende Kontaktwippe (42), in deren Bereich sich mindestens ein Befehlsaufnahmeelement (45) zur Befehlsweitergabe an eine Elektronikeinheit (E) befindet, die ihrerseits in einer der Kontaktwippe (42) entsprechenden Weise alternativ zu dieser auf die Schaltelemente (8) des Geräteunterteils (30) einwirkt.

Hierzu ist die Elektronikeinheit (E) mit einer eigenen vom Geräteunterteil (30) getrennten Auswerteelektronik (1) ausgestattet, die ihrerseits in der Bedieneinheit angeordnet und mit einer zur Erfassung der vom Befehlsaufnahmeelement (45) kommenden Steuersignale vorgesehenen Aufnahmestufe (4) verbunden ist. Eine Schnittstellenlogik (6) zur Ausgabe an Funktionsgruppen des Geräteunterteils (30) ist vorgesehen, und das Aufstecken auf das Geräteunterteil (30) erfolgt über eine mechanisch und elektrisch einheitliche Schnittstelle, die so ausgebildet ist, daß mehrere Bedieneinheiten (40) mit unterschiedlicher Bedienfunktion mit mehreren für unterschiedliche Schalt-, Steuerungs- oder Stellaufgaben geeigneten Geräteunterteilen (30) so kombinierbar sind, daß selbständige Installationsgeräte mit unterschiedlicher Wirkungsweise entstehen.

## Beschreibung

Die Erfindung betrifft eine Bedieneinheit nach dem Oberbegriff des Anspruchs 1.

Schaltaufgaben wurden im Bereich der Installationstechnik noch vor einigen Jahren fast ausschließlich mit Hilfe mechanischer Schalter gelöst, zu denen man hingehen mußte, um sie zu betätigen. Inzwischen werden jedoch immer mehr ferngesteuerte Schaltsysteme eingesetzt, wobei moderne Hausleitsysteme, die z. B. mit einem Netzbus ausgestattet sind, oder auch drahtlose Übertragungssysteme, z.B. mit Ultraschall- oder Infrarotlicht, zum Einsatz kommen. In diesen Fällen werden die Aufgaben der mechanischen Schalter durch elektronische Bauelemente gelöst.

Unabhängig davon, welcher Art der Verbraucher ist, der ein- oder ausgeschaltet oder auch, wie beispielsweise mit Dimmern und Jalousiesteuerungen, beeinflußt werden soll, man wird in aller Regel, ergänzend zu den elektronischen Schalt- und Steuerelementen, vor Ort auch noch einen mechanischen Schalter installieren, um bei Bedarf unmittelbar eingreifen zu können. So wird man beim

Einbau einer IR-(Infrarot)-Fernsteuerung zur Jalousieverstellung auf den bisher verwendeten mechanischen Schalter bzw. Taster nicht verzichten, sondern einen solchen unmittelbar neben dem IR-Empfänger einbauen.

Um einerseits eine raumsparende Installation zu ermöglichen und andererseits die Anzahl der benötigten Einbaueinheiten zu reduzieren, hat man IR-Schalter entwickelt, bei denen ein IR-Empfänger und ein mechanischer Schalter oder Taster in einer Baueinheit vereinigt sind. Eine solche Baueinheit kann somit einfach gegen einen herkömmlichen Schalter ausgetauscht werden. Weiterhin ist es bereits bekannt als Schalt- oder Steuergerät dienende Installationsgeräte so aufzubauen, daß eine Unterputzbaueinheit und eine Bedieneinheit über eine entsprechend ausgebildete Schnittstelle miteinander verbindbar sind.

Aufgabe der Erfindung ist es, eine Bedieneinheit nach dem Oberbegriff des Anspruchs 1 dahingehend zu verbessern, daß mit einer möglichst geringen Anzahl unterschiedlicher Baueinheiten und damit entsprechend geringen Anforderungen an Lagerhaltung und Beschaffung, ein breites Spektrum verschiedener Anwendungen abgedeckt werden kann.

Diese Aufgabe wird durch die in Anspruch 1 gekennzeichneten Merkmale gelöst. Zweckmäßige Ausgestaltungen und Weiterbildungen des Erfindungsgegenstandes sind in den Unteransprüchen genannt.

Dadurch, daß in der Bedieneinheit eine eigene vom Geräteunterteil getrennte Auswerteelektronik angeordnet ist und diese mit einer Aufnahmestufe verbunden ist, die zur Erfassung der vom Befehlsaufnahmeelement kommenden Steuersignale dient, die außerdem mit einer Schnittstellenlogik zur Ausgabe an Funktionsgruppen des Geräteunterteils in Verbindung steht, hat die Bedieneinheit den Charakter einer weitgehend selbständigen Funktionseinheit erhalten. Als Auswerteelektronik dient im allgemeinen ein Prozessor. Besondere Bedeutung erlangt die Ausbildung einer mechanisch und elektrisch einheitlichen Schnittstelle die so erfolgt, daß mehrere Bedieneinheiten mit unterschiedlicher Bedienfunktion mit mehreren für unterschiedliche Schalt-, Steuerungs- oder Stellaufgaben geeigneten Geräteunterteilen miteinander kombinierbar sind. Hierdurch gelingt es mit relativ wenigen Grundbausteinen eine Vielzahl selbständiger Installationsgeräte mit unterschiedlicher Wirkungsweise zu schaffen. Wegen des breiten Bedarfs ist es zweckmäßig das Geräteunterteil vorzugsweise entweder als Dimmer zur Lampensteuerung oder als Jalousie-Steuerung oder als einen mit Relais aufgebauten Ein/Aus-oder Serienschalter auszuführen.

Eine vorteilhafte Weiterbildung des Erfindungsgegenstandes zur Steigerung des Bedienkomforts sieht vor, daß die Auswerteelektronik eine Speicherlogik beinhaltetet oder mit einer solchen verbunden ist und in dieser bestimmte Schaltzustände oder Stellungen der Schaltelemente abspeicherbar und bei Bedarf reaktivierbar sind. So werden die als optimal empfundenen Einstellungen nicht durch einen Netzausfall oder das Abschalten eines Hauptschalters gelöscht.

Um ein möglichst breites Spektrum an Bedienfunktionen abzudecken, ist es möglich die Bedieneinheit als unterschiedliche Varianten aufzubauen. Bei einer dieser Varianten enthält die Bedieneinheit eine IR-Empfängerstufe und als Befehlsaufnahmeelement dient ein Fenster oder eine IR-durchlässige Wandung im Bereich der Bedienfläche mit einem dahinter in der Bedieneinheit angeordneten IR-Sensor.

Bei einer anderen Variante enthält die Bedieneinheit eine Zeitschaltuhr und als Befehlsaufnahmeelement sind im Bereich der Bedienfläche angeordnete Stellelemente zur Vorgabe von Schaltzeiten vorgesehen. Weiterhin ist es möglich die Bedieneinheit so aufzubauen, daß sie eine Sensorelektronik enthält und als Befehlsaufnahmeelement mindestens ein im Bereich der Bedienfläche, ggf. hinter einem Fenster, einen Sensor anzuordnen, z.B. einen lichtempfindlichen Sensor, wobei dieser Sensor zur Erkennung von Grenzwerten physikalischer Größen dient.

Bezüglich der Ausbildung der als mechanischer Schalter dienenden Kontaktwippe ist es von Vorteil, wenn diese beidseitig einer mittleren Wippenachse eine obere Bedienfläche und eine untere Bedienfläche aufweist und zwischen der jeweiligen Bedienfläche und ihrer räumlichen Anordnung, eine logisch eindeutige Zuordnung zur jeweiligen Stellrichtung des Schaltelementes vorgesehen ist. Besonders leicht zu merken ist es, wenn die logische Zuordnung so erfolgt, daß bei einer Betätigung der oberen Bedienfläche ein Dimmer den Befehl "Lampen heller" und eine Jalousiesteuerung den Befehl "Jalousie auf" erhält und bei einer Betätigung der unteren Bedienfläche ein Dimmer den Befehl "Lampen dunkler" und eine Jalousiesteuerung den Befehl "Jalousie zu" erhält. Es hängt vom Aufbau der Kontaktwippe ab, ob die "mittlere Wippenachse" wirklich existiert oder nur eine Bezugslinie ist.

Um aus einer Vielzahl gleichartig aufgebauter IR-Empfänger den jeweils richtigen ansteuern zu können, ist die Auswerteelektronik in vorteilhafter Weise mit einer Code-schalterelektronik verbunden, über deren Codeschalter ein bestimmter für das jeweilige Installationsgerät gültiger Empfangscode vorgebbar ist. Der Codeschalter ist hierzu auf der der Bedienfläche gegenüberliegenden Rückseite der Bedieneinheit gut zugänglich angeordnet.

Ob der IR-Empfänger das ihm zugedachte Empfangssignal erkannt hat, wird dadurch verdeutlicht, daß im Bereich eines zur Aufnahme eines IR-Signals dienenden Fensters eine Leuchtdiode angeordnet ist, die durch Aufleuchten den Empfang des IR-Signals bestätigt.

Es ist zweckmäßig die Elektronik für den IR-Empfänger auf einer Leiterplatte unmittelbar in die Bedieneinheit einzubauen und die Stromversorgung über eine Schnittstelle aus dem Geräteunterteil sicherzustellen.

Ausführungsbeispiele der Erfindung sind in den Zeichnungen dargestellt und werden im folgenden näher beschrieben. Es zeigen:
- Fig. 1: Ein Blockschaltbild mit den Funktionseinheiten der Bedieneinheit,
- Fig. 2: eine Unterputzbaueinheit seitlich im Schnitt,
- Fig. 3: die Unterputzbaueinheit nach Fig. 2 in Draufsicht,
- Fig. 4: eine Bedieneinheit seitlich im Schnitt,
- Fig. 5: die Bedieneinheit nach Fig. 4 in Draufsicht auf die Bedienfläche,

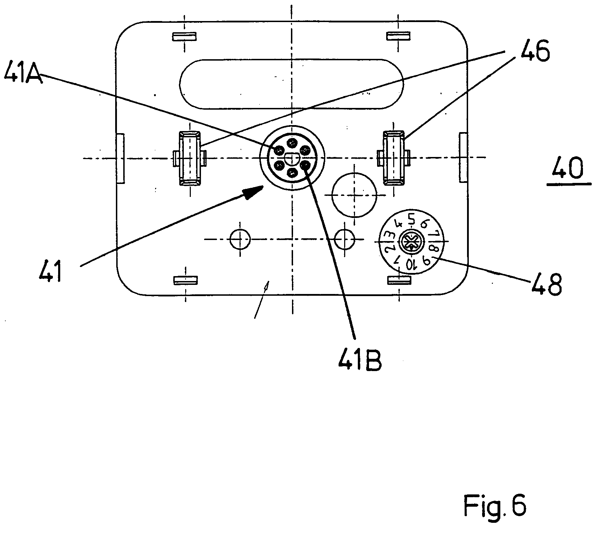

- Fig. 6: die Bedieneinheit nach Fig. 4 in Draufsicht auf die Rückseite des Gerätes.

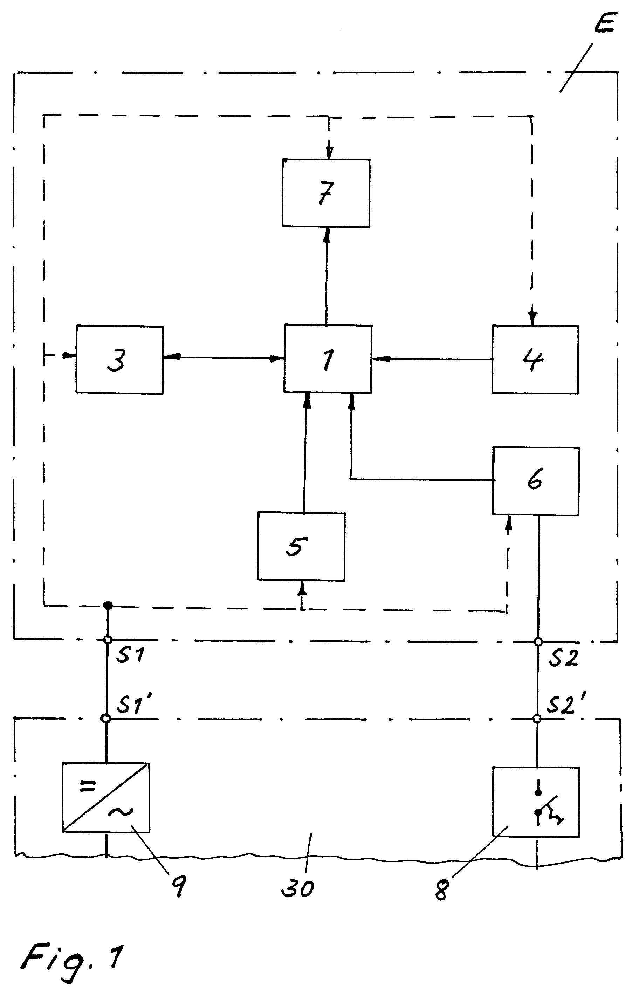

Wie Fig. 1 erkennen läßt, besitzt die Bedieneinheit eine Elektronikeinheit E mit einer Auswerteelektronik 1, die als digitaler Steuerbaustein, vorzugsweise als Prozessor, ausgebildet ist und mit verschiedenen Ein- und Ausgabeeinheiten in Verbindung steht. Da die Bedieneinheit in diesem Beispiel die Bedienung eines Schalt- oder Steuergerätes durch IR-Signale oder durch Betätigung einer Kontaktwippe ermöglichen soll, ist eingangsseitig eine IR-Empfangsstufe 4 und eine Vor-Ort-Bedienung 5 vorgesehen. Eine Codeschalterelektronik sorgt dafür, daß nur die mit dem richtigen Code versehenen IR-Signale in der Bedieneinheit zur Auswertung gelangen.

Weiterhin ist noch eine Schnittstellenlogik 6 zur Anpassung der von der Auswerteelektonik 1 kommenden Schalt-bzw. Steuersignale an eine bestimmte Unterputzbaueinheit 30 vorgesehen. Im vorliegenden Beispiel sind in der Unterputzbaueinheit 30 Schaltelemente 8 angedeutet, die z.B. durch ein Relais repräsentiert sein können und über eine Schnittstelle S2, S2' mit der Schnittstellenlogik 6 verbunden sind. Eine Speicherlogik sorgt dafür, daß die von der Auswerteelektonik 1 kommenden Schalt- bzw. Steuersignale in einem EEPROM festgehalten werden und so bei einem Netzausfall oder nach dem Abschalten eines Hauptschalters noch nach einem Jahr reproduzierbar sind.

Die Stromversorgung aller Funktionsgruppen der Elektronikeinheit E erfolgt über eine Schnittstelle S1, S1' aus einem in der Unterputzbaueinheit 30 angeordneten Netzteil 9.

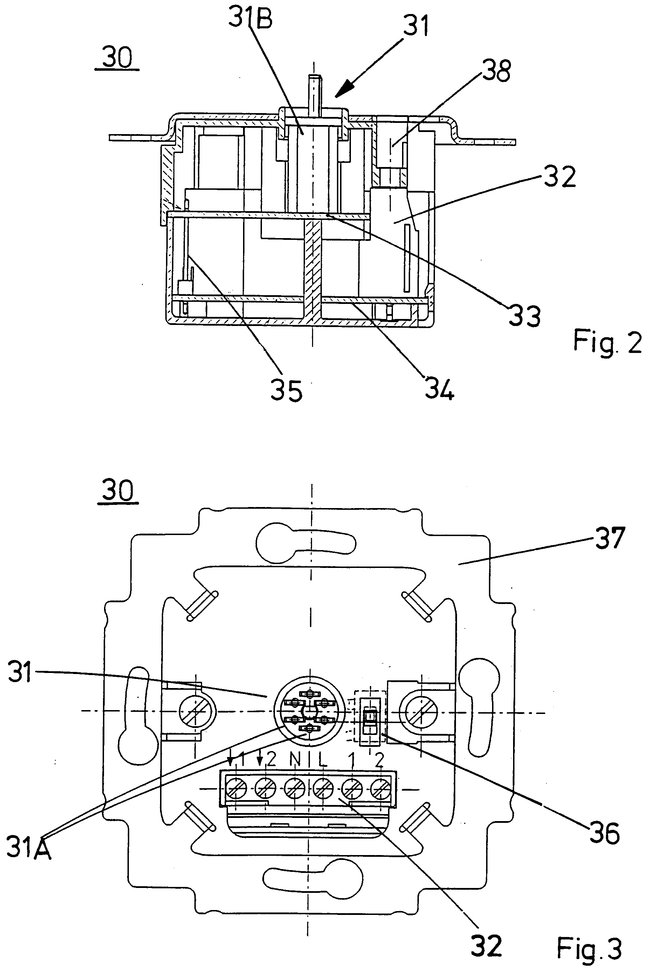

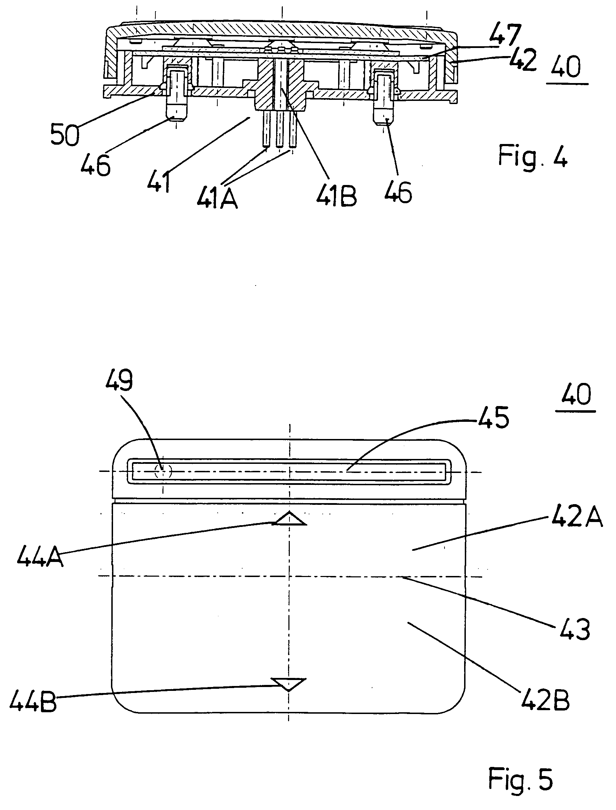

In den Figuren 4 bis 5 ist der konstruktive Aufbau einer Bedieneinheit 40 dargestellt, die auf eine Unterputzbaueinheit 30 nach den Figuren 2 und 3 aufsteckbar ist. Auf einer Trägereinheit 50 ist eine Kontaktwippe 47 befestigt und zwischen beiden ist eine Leiterplatte 42 angeordnet, auf der sich die Bauelemente der Elektronikeinheit E nach Fig. 1 befinden. Die Kontaktwippe 42 ist um eine gedachte mittlere Wippenachse 43 schwenkbar, so daß ihre Bedienfläche in eine obere Bedienfläche 42a und eine untere Bedienfläche 42b, bezogen auf einen senkrechten Wandeinbau, aufgeteilt ist. Eine logisch überzeugende Zuordnung sorgt dafür, daß bei einer Betätigung der oberen, mit einem nach oben gerichteten Pfeil gekennzeichneten Bedienfläche 42a ein Befehl "Öffnen" bzw. "Heller" gegeben wird, während eine Betätigung der unteren Bedienfläche 42b einen gegenteiligen Befehl auslöst.

Im äußeren Bereich der oberen Bedienfläche 42a ist ein Befehlsaufnahmeelement 45, im vorliegenden Fall ein Fenster mit einem dahinter auf der Leiterplatte 47 angeordneten IR-Sensor, vorgesehen. Eine ebenfalls im Bereich des Fensters auf der Leiterplatte angeordnete Leuchtdiode 49 ermöglicht eine Bestätigung des IR-Signalempfangs.

Auf der der Unterputzbaueinheit 30 zugewandten Seite des Trägerteils 50 ist eine Schnittstelle 41 mit Kontaktstiften 41a ausgebildet, über die eine elektrische und mechanische Verbindung zwischen der Bedieneinheit und der Unterputzbaueinheit 30 hergestellt wird. Die Schnittstelle 41 findet ihr Gegenstück 31 auf der Oberseite der Unterputzbaueinheit 30 mit Kontaktfedern 31a. Die mechanische Befestigung wird noch durch einen Profilzapfen 31b, der in ein Profilloch eingreift und durch Spangen 46, die in Aussparungen 38 eingreifen, unterstützt. Durch diese Elemente ist auch eine verdrehsichere Zuordnung gewährleistet.

Zum Einstellen leicht zugänglich, ist auf der Unterseite der Bedieneinheit 30 ein Codeschalter 48 für den IR- Empfangscode angeordnet, während sich auf der Oberseite der Unterputzbaueinheit 30 ein Schiebeschalter befindet. Letzterer dient dazu, bei einer zur Jalousiesteuerung vorgesehenen Unterputzbaueinheit 30 zwischen einem Programm zur Auf/Ab-Steuerung und einem Programm zur Verstellung des Lamellenstellwinkels einer Jalousie umzuschalten. Die hierzu erforderlichen elektronischen Bauelemente befinden sich auf Leiterplatten 33, 34, die über ein Kabel oder eine Kontaktschiene elektrisch miteinander verbunden sind. Eine Klemmenleiste 32 ermöglicht den Anschluß der zu steuernden oder zu schaltenden Funktionseinheiten sowie den Anschluß der Netzspannung.

## Patentansprüche

1. Bedieneinheit zum austauschbaren Aufstecken auf ein mit Schaltelementen ausgestattetes Geräteunterteil (30) eines zum unmittelbaren Anschließen von Verbrauchern dienenden Installationsgerätes (30,40), insbesondere zum Aufstecken auf eine Unterputzbaueinheit, mit einer Schnittstelle zur Kontaktierung des Geräteunterteils, und mit einer als Schalter und/oder Taster wirkenden Kontaktwippe (42), in deren Bereich sich mindestens ein Befehlsaufnahmeelement (45) zur Befehlsweitergabe an eine Elektronikeinheit (E) befindet, die ihrerseits in einer der Kontaktwippe (42) entsprechenden Weise alternativ zu dieser auf die Schaltelemente (8) des Geräteunterteils (30) einwirkt, **dadurch gekennzeichnet**, daß die Elektronikeinheit (E) eine eigene vom Geräteunterteil (30) getrennte Auswerteelektronik (1) besitzt, die in der Bedieneinheit angeordnet ist und mit einer zur Erfassung der vom Befehlsaufnahmeelement (45) kommenden Steuersignale vorgesehenen Aufnahmestufe (4) verbunden ist und mit einer Schnittstellenlogik (6) zur Ausgabe an Funktionsgruppen des Geräteunterteils (30) in Verbindung steht, und daß das Aufstecken auf das Geräteunterteil (30) über eine mechanisch und elektrisch einheitliche Schnittstelle (31, 41) erfolgt, die so ausgebildet ist, daß mehrere Bedieneinheiten (40) mit unterschiedlicher Bedienfunktion mit mehreren für unterschiedliche Schalt-, Steuerungs-oder Stellaufgaben geeigneten Geräteunterteilen (30) so miteinander kombinierbar sind, daß selbständige Installationsgeräte mit unterschiedlicher Wirkungsweise entstehen, wobei das Geräteunterteil (30) insbesondere entweder als Dimmer zur Lampensteuerung oder als Jalousiesteuerung oder als ein mit Relais aufgebauter Ein/Ausoder Serienschalter dienen kann.

2. Bedieneinheit nach Anspruch 1, dadurch gekennzeichnet, daß die Auswerteelektronik (1) eine Speicherlogik beinhaltet oder mit einer solchen verbunden ist und in dieser bestimmte Schaltzustände oder Stellungen der Schaltelemente (8) abspeicherbar und bei Bedarf reaktivierbar sind.

3. Bedieneinheit nach Anspruch 1 oder 2, dadurch gekennzeichnet, daß die Bedieneinheit (40) eine IR-Empfängerstufe enthält und als Befehlsaufnahmeelement (45) ein Fenster oder eine IR-durchlässige Wandung im Bereich der Bedienfläche (42a,42b) mit einem dahinter in der Bedieneinheit (40) angeordneten IR-Sensor dient.

4. Bedieneinheit nach Anspruch 1 oder 2, dadurch gekennzeichnet, daß die Bedieneinheit (40) eine Zeitschaltuhr enthält und als Befehlsaufnahmeelement (45) im Bereich der Bedienfläche (42a,42b) angeordnete Stellelemente zur Vorgabe von Schaltzeiten dienen.

5. Bedieneinheit nach Anspruch 1 oder 2, dadurch gekennzeichnet, daß die Bedieneinheit (40) eine Sensorelektronik enthält und als Befehlsaufnahmeelement (45) mindestens ein im Bereich der Bedienfläche (42a, 42b), ggf. hinter einem Fenster, angeordneter Sensor, insbesondere ein lichtempfindlicher Sensor, zur Erkennung von Grenzwerten physikalischer Größen dient.

6. Bedieneinheit nach einem der vorhergehenden Ansprüche, dadurch gekennzeichnet, daß die Kontaktwippe (42) beidseitig einer mittleren Wippenachse (43) eine obere Bedienfläche (42a) und eine untere Bedienfläche (42b) aufweist und zwischen der jeweiligen Bedienfläche (42a,42b) und ihrer räumlichen Anordnung eine logisch eindeutige Zuordnung zur jeweiligen Stellrichtung des Schaltelementes (8) vorgesehen ist.

7. Bedieneinheit nach Anspruch 6, dadurch gekennzeichnet, daß die logische Zuordnung so erfolgt, daß bei einer Betätigung der oberen Bedienfläche (42a) ein Dimmer den Befehl "Lampen heller" und eine Jalousie-Steuerung den Befehl "Jalousie auf" erhält und bei einer Betätigung der unteren Bedienfläche (42b) ein Dimmer den Befehl "Lampen dunkler" und eine Jalousiesteuerung den Befehl "Jalousie zu" erhält.

8. Bedieneinheit nach einem der vorhergehenden Ansprüche, dadurch gekennzeichnet, daß die Auswerteelektronik (1) zur Auswahl eines richtigen IR-Empfangssignals mit einer Codeschalterelektronik (7) verbunden ist, über deren Codeschalter (48) ein bestimmter für das jeweilige Installationsgerät gültiger Empfangscode vorgebbar ist und der Codeschalter (48) auf der Bedienfläche (42a,42b) gegenüberliegenden Rückseite der Bedieneinheit (40) gut zugänglich angeordnet ist.

9. Bedieneinheit nach einem der vorhergehenden Ansprüche 3 und 9, dadurch gekennzeichnet, daß im Bereich eines zur Aufnahme eines IR-Signals dienenden Fensters (45) eine Leuchtdiode angeordnet ist, die durch Aufleuchten den Empfang eines IR-Signals bestätigt.

10. Bedieneinheit nach einem der vorherigen Ansprüche, dadurch gekennzeichnet, daß eine Leiterplatte (42) eingebaut ist, auf der die Elektronik für den IR-Empfänger (45) untergebracht ist und die Stromversorgung für diese über die Schnittstelle (31, 41) vom Geräteunterteil (30) aus erfolgt.
